# EUROPEAN PATENT APPLICATION

(11) **EP 4 601 354 A1**
(43) Date of publication of application: **13.08.2025**
(21) Application number: 23859282.8
(22) Date of filing: 28.08.2023
(51) Int. Cl.: H04W 28/02

(54) **METHOD AND DEVICE USED IN NODE FOR WIRELESS COMMUNICATION**

(30) Priority: 01.09.2022 CN 202211067737
(71) Applicant: Apogee Networks, LLC, Dallas, TX 75201 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2023/115173
(87) International publication number: WO 2024/046250

(57) **Abstract**

The present application discloses a method and apparatus used in a node for wireless communication. The device comprises: a first receiver for receiving first DCI, the first DCI comprising a first field; and a first transmitter for sending a first PUCCH at a first power, wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition, and one DCI satisfying the first condition schedules a plurality of serving cells.

## Description

### Technical Field

The present application relates to transmission methods and apparatus in wireless communication systems, in particular to transmission methods and apparatus of wireless signals in wireless communication systems that support cellular networks.

### Background Technology

In 5G NR systems, in order to support eMBB (Enhanced Mobile Broadband), a large amount of DCI (Downlink Control Information) needs to be sent to complete the scheduling of physical layer channels (such as PDSCH (Physical Downlink Shared CHannel), PUSCH (Physical Uplink Shared CHannel), etc.); using a single DCI to schedule a plurality of PDSCHs on a plurality of serving cells is an effective way to reduce DCI overhead. How to determine the corresponding PUCCH transmit power is an important aspect that needs to be considered.

### Summary of Invention

The present application discloses a solution to the above problems. It is to be noted that the above description uses eMBB as an example; the present application is also applicable to other scenarios, such as URLLC (Ultra-Reliable Low-Latency Communications), Internet of Vehicles, Internet of Things, NTN (Non-Terrestrial Networks), MBS (Multicast Broadcast Services), XR (Extended Reality), eMTC (enhanced Machine-Type Communication), full-duplex communication, etc., achieving similar technical effects. In addition, the adoption of a unified solution in different scenarios (including but not limited to eMBB, URLLC, Internet of Vehicles, Internet of Things, NTN, MBS, XR, eMTC, and full-duplex communication) can also help reduce hardware complexity and cost or improve performance. In the absence of conflict, the embodiments and features in any node of the present application may be applied to any other node. In the absence of conflict, the embodiments of the present application and the features in the embodiments may be combined with each other arbitrarily.

As one embodiment, the interpretation of terminology in the present application is the definition of a specification protocol TS36 series, referring to 3GPP.

As one embodiment, the interpretation of terminology in the present application is the definition of a specification protocol TS38 series, referring to 3GPP.

As one embodiment, the interpretation of terminology in the present application is the definition of a specification protocol TS37 series, referring to 3GPP.

As one embodiment, the interpretation of terminology in the present application refers to the definitions in the specifications protocol of IEEE (Institute of Electrical and Electronics Engineers).

The present application discloses a method used in a first node for wireless communication, comprising:
receiving first DCI comprising a first field;
sending a first PUCCH at a first power;
wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition, and one DCI satisfying the first condition schedules a plurality of serving cells.

As one embodiment, the advantages of the above method include: providing more precise power control for PUCCH (physical uplink control channel).

As one embodiment, the advantages of the above method include: avoiding unnecessary power increases.

As one embodiment, the advantages of the above method include: improving uplink transmission performance.

As one embodiment, the advantages of the above method include: reducing interference between users and improving system performance.

As one embodiment, the advantages of the above method include: saving signaling overhead.

As one embodiment, the advantages of the above method include: good compatibility.

As one embodiment, the advantages of the above method include: the changes to the existing 3GPP standards are minor.

According to one aspect of the present application, the method described above is characterized in that,
the total amount of DCI that satisfies the first condition occupying the given serving cell detected in the at least one PDCCH monitoring occasion refers to: the total amount of DCI that satisfies the first condition for the given serving cell detected in the at least one PDCCH monitoring occasion.

According to one aspect of the present application, the method described above is characterized in that,
the total amount of DCI that satisfies the first condition occupying the given serving cell detected in the at least one PDCCH monitoring occasion refers to: the total amount of DCI that satisfies the first condition on the given serving cell detected in the at least one PDCCH monitoring occasion.

According to one aspect of the present application, the method described above is characterized in that,
the total amount of DCI that satisfies the first condition occupying the given serving cell detected in the at least one PDCCH monitoring occasion refers to: the total amount of DCI that satisfies the first condition transmitted on the given serving cell detected in the at least one PDCCH monitoring occasion.

According to one aspect of the present application, the method described above is characterized in that,
the total amount of DCI that satisfies the first condition occupying the given serving cell detected in the at least one PDCCH monitoring occasion refers to: the total amount of DCI on the given serving cell that satisfies the first condition detected in the at least one PDCCH monitoring occasion.

According to one aspect of the present application, the method described above is characterized in that,
the total amount of DCI that satisfies the first condition occupying the given serving cell detected in the at least one PDCCH monitoring occasion refers to: the total amount of DCI that satisfies the first condition with the given serving cell as the reference serving cell detected in the at least one PDCCH monitoring occasion; for DCI scheduling multiple serving cells, the corresponding reference serving cell is determined according to at least one of the scheduling order or the serving cell index.

According to one aspect of the present application, the method described above is characterized in that,
the first power is equal to the smaller of an upper limit power and a target power, the target power is equal to the sum of a plurality of power components, and at least one power component of the plurality of power components depends on a value of the first field in the first DCI and the Q1 components.

According to one aspect of the present application, the method described above is characterized in that,
at least one of the plurality of power components depends on a first reference value, the first reference value is the number of HARQ-ACK bits used to obtain PUCCH transmit power, and the first reference value depends on the value of the first field in the first DCI and the Q1 components.

According to one aspect of the present application, the method described above is characterized in that,

One of the plurality of power components is equal to 10log₁₀ (K₁ · First value/Second value), the second value is the number of resource elements used for PUCCH transmission, the first value is equal to the sum of a plurality of values, one of the plurality of values is equal to a positive integer multiple of the result of taking the difference of the value of the first field in the first DCI and the total amount of DCI detected in the at least one PDCCH monitoring occasion that satisfies the first condition modulo a third value, and the third value is equal to 2 to the power of V, where V is equal to the number of bits in a DAI field.

The present application discloses a method used in a second node for wireless communication, comprising:
sending first DCI comprising a first field;
receiving a first PUCCH sent at a first power;
wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected by the transmitting end of the first PUCCH in at least one PDCCH monitoring occasion, occupies the given serving cell, and satisfies a first condition, and one DCI satisfying the first condition schedules a plurality of serving cells.

According to one aspect of the present application, the method described above is characterized in that,
the total amount of DCI that satisfies the first condition occupying the given serving cell detected by the transmitting end of the first PUCCH in the at least one PDCCH monitoring occasion refers to: the total amount of DCI that satisfies the first condition for the given serving cell detected by the transmitting end of the first PUCCH in the at least one PDCCH monitoring occasion.

According to one aspect of the present application, the method described above is characterized in that,
the total amount of DCI that satisfies the first condition occupying the given serving cell detected by the transmitting end of the first PUCCH in the at least one PDCCH monitoring occasion refers to: the total amount of DCI that satisfies the first condition on the given serving cell detected by the transmitting end of the first PUCCH in the at least one PDCCH monitoring occasion.

According to one aspect of the present application, the method described above is characterized in that,
the total amount of DCI that satisfies the first condition occupying the given serving cell detected by the transmitting end of the first PUCCH in the at least one PDCCH monitoring occasion refers to: the total amount of DCI that satisfies the first condition transmitted on the given serving cell detected by the transmitting end of the first PUCCH in the at least one PDCCH monitoring occasion.

According to one aspect of the present application, the method described above is characterized in that,
the total amount of DCI that satisfies the first condition occupying the given serving cell detected by the transmitting end of the first PUCCH in the at least one PDCCH monitoring occasion refers to: the total amount of DCI on the given serving cell that satisfies the first condition detected by the transmitting end of the first PUCCH in the at least one PDCCH monitoring occasion.

According to one aspect of the present application, the method described above is characterized in that,
the total amount of DCI that satisfies the first condition occupying the given serving cell detected by the transmitting end of the first PUCCH in the at least one PDCCH monitoring occasion refers to: the total amount of DCI that satisfies the first condition with the given serving cell as the reference serving cell detected by the transmitting end of the first PUCCH in the at least one PDCCH monitoring occasion; for DCI scheduling multiple serving cells, the corresponding reference serving cell is determined according to at least one of the scheduling order or the serving cell index.

According to one aspect of the present application, the method described above is characterized in that,
the first power is equal to the smaller of an upper limit power and a target power, the target power is equal to the sum of a plurality of power components, and at least one power component of the plurality of power components depends on a value of the first field in the first DCI and the Q1 components.

According to one aspect of the present application, the method described above is characterized in that,
at least one of the plurality of power components depends on a first reference value, the first reference value is the number of HARQ-ACK bits used to obtain PUCCH transmit power, and the first reference value depends on the value of the first field in the first DCI and the Q1 components.

According to one aspect of the present application, the method described above is characterized in that,

One of the plurality of power components is equal to 10log₁₀ (K₁ · First value/Second value), the second value is the number of resource elements used for PUCCH transmission, the first value is equal to the sum of a plurality of values, one of the plurality of values is equal to a positive integer multiple of the result of taking the difference of the value of the first field in the first DCI and the total amount of DCI detected by the transmitting end of the first PUCCH in the at least one PDCCH monitoring occasion that satisfies the first condition modulo a third value, and the third value is equal to 2 to the power of V, where V is equal to the number of bits in a DAI field.

The present application discloses a first node for wireless communication, comprising:
a first receiver for receiving first DCI comprising a first field;
and a first transmitter for sending a first PUCCH at a first power;
wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition, and one DCI satisfying the first condition schedules a plurality of serving cells.

The present application discloses a second node for wireless communication, comprising:
a second transmitter sending first DCI comprising a first field;
a second receiver receiving a first PUCCH sent at a first power;
wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected by the transmitting end of the first PUCCH in at least one PDCCH monitoring occasion, occupies the given serving cell, and satisfies a first condition, and one DCI satisfying the first condition schedules a plurality of serving cells.

### Description of Drawings

Other features, objects, and advantages of the present application will become more apparent by reading the detailed description of the non-limiting embodiments with reference to the following drawings:
FIG. 1 illustrates a processing flow chat of a first node according to one embodiment of the present application;
FIG. 2 illustrates a schematic diagram of a network architecture according to one embodiment of the present application;
FIG. 3 illustrates a schematic diagram of a wireless protocol architecture for a user plane and a control plane according to one embodiment of the present application;
FIG. 4 illustrates a schematic view of a first communications device and a second communications device according to one embodiment of the present application;
FIG. 5 illustrates a flow chart of signal transmission according to one embodiment of the present application;
FIG. 6 illustrates a schematic diagram of the relationship between a first power, an upper limit power, a target power, a first reference value, a value of a first field in a first DCI, and Q1 components according to one embodiment of the present application;
FIG. 7 illustrates a schematic diagram of the relationship between a first power, an upper limit power, a target power, a first value, and a second value according to one embodiment of the present application;
FIG. 8 illustrates a schematic diagram of the relationship between a first power, an upper limit power, a target power, a first reference value, a value of a first field in a first DCI, and the total amount of DCI satisfying a first condition detected in at least one PDCCH monitoring occasion according to one embodiment of the present application;
FIG. 9 illustrates a schematic diagram illustrating a first power according to one embodiment of the present application;
FIG. 10 illustrates a structural block diagram of a processing apparatus in a first node device according to one embodiment of the present application;
FIG. 11 illustrates a structural block diagram of a processing apparatus in a second node device according to one embodiment of the present application.

### Detailed Description

The technical solutions of this application will be described in further detail below in conjunction with the accompanying drawings. It is to be noted that in the absence of conflict, the embodiments of the present application and the features in the embodiments may be combined with each other arbitrarily.

### Embodiment 1

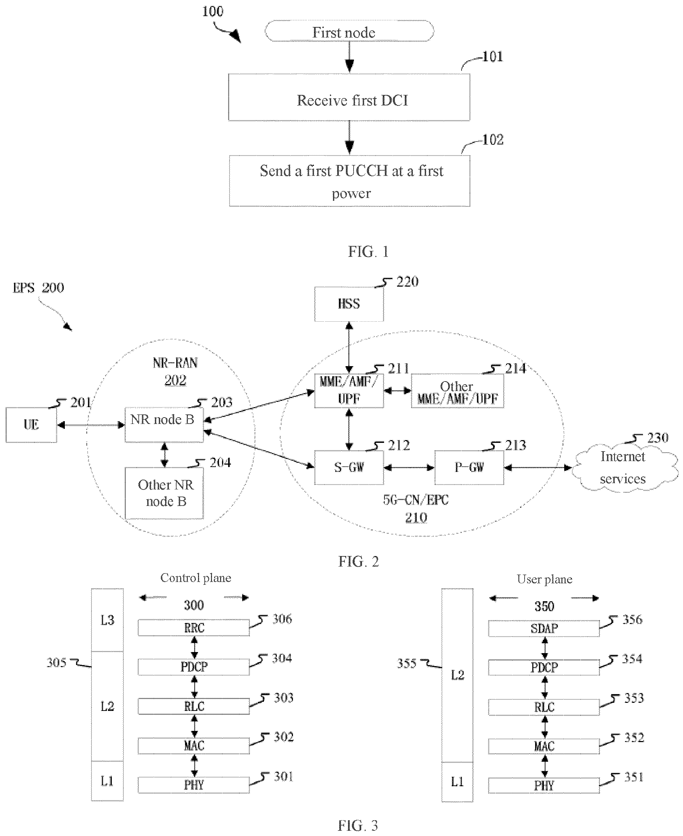

Embodiment 1 illustrates a processing flow chart of a first node according to one embodiment of the present application, as shown in FIG. 1.

In Embodiment 1, the first node in the present application receives a first DCI in step 101; a first PUCCH is sent at a first power in step 102.

In Embodiment 1, the first DCI comprises a first field; the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition, and one DCI satisfying the first condition schedules a plurality of serving cells.

As one embodiment, the first DC is dynamically configured.

As one embodiment, the first DC includes layer 1 (L1) signaling.

As one embodiment, the first DC includes layer 1 (L1) control signaling.

As one embodiment, the first DC includes one or more fields in one physical layer signaling.

As one embodiment, the first DCI is signaling used for scheduling PDSCH.

As one embodiment, the first DCI is in a DCI format.

As one embodiment, the first DCI is in a DCI format 1_3.

As one embodiment, the first DCI is in a DCI format 1_4.

As one embodiment, the first DCI is in a DCI format 1_5.

As one embodiment, the first DCI is in a DCI format 1_6.

As one embodiment, the first DCI is in a DCI format 1_7.

As one embodiment, the first DCI is in a DCI format 1_8.

As one embodiment, the first field comprises only one bit.

As one embodiment, the first field comprises a plurality of bits.

As one embodiment, the first field comprises 2 bits.

As one embodiment, the first field comprises a number of bits equal to 2.

As one embodiment, the first field comprises a number of bits greater than 2.

As one embodiment, the value of the first field is used to represent the cumulative number of {serving cells, PDCCH monitoring occasions}.

As one embodiment, the value of the first field is used to represent the total number of {serving cells, PDCCH (physical downlink control channel) monitoring occasions}.

As one embodiment, the first field is a DAI field.

As one embodiment, the first field is a counter DAI (downlink assignment index) field.

As one embodiment, the first field is a total DAI field.

As one embodiment, the first field is a field used to represent a count of DCI.

As one embodiment, the first power is a PUCCH transmit power.

As one embodiment, the expression sending a first PUCCH includes: executing a PUCCH transmission.

As one embodiment, the expression sending a first PUCCH includes: sending a signal in a first PUCCH.

As one embodiment, the expression sending a first PUCCH includes: sending UCI (uplink control information) bits in a first PUCCH.

As one embodiment, the expression sending a first PUCCH includes: sending at least HARQ-ACK (hybrid automatic repeat request acknowledgment) bits in a first PUCCH.

As one embodiment, the first PUCCH carries at least HARQ-ACK information.

As one embodiment, the Q1 is equal to 1.

As one embodiment, the Q1 is greater than 1.

As one embodiment, the Q1 is not greater than 4.

As one embodiment, the Q1 is not greater than 8.

As one embodiment, the Q1 is not greater than 32.

As one embodiment, the Q1 is not greater than 1024.

As one embodiment, the Q1 is configurable.

As one embodiment, the Q1 is equal to the number of serving cells that support DCI scheduling of a plurality of serving cells.

As one embodiment, the Q1 serving cells are all serving cells configured for the first node.

As one embodiment, at least one of the Q1 serving cells is configurable.

As one embodiment, the Q1 serving cells are all serving cells that support DCI scheduling of a plurality of serving cells.

As one embodiment, the Q1 serving cells are all serving cells that support scheduling by DCI that satisfies a first condition.

As one embodiment, the first node is configured to monitor DCI for scheduling a plurality of serving cells on any serving cell of Q1 serving cells.

As one embodiment, the first node is configured to monitor DCI that satisfies a first condition on any serving cell of Q1 serving cells.

As one embodiment, a DCI satisfying the first condition schedules a plurality of serving cells.

As one embodiment, at least one of Q1 serving cells is indicated by the first node.

As one embodiment, DCI that satisfies the first condition refers to: DCI scheduling a plurality of serving cells.

As one embodiment, DCI that satisfies the first condition refers to: DCI format 1_3.

As one embodiment, DCI that satisfies the first condition refers to: DCI format 1_4.

As one embodiment, DCI that satisfies the first condition refers to: DCI format 1_5.

As one embodiment, DCI that satisfies the first condition refers to: DCI format 1_6.

As one embodiment, DCI that satisfies the first condition refers to: DCI format 1_7.

As one embodiment, DCI that satisfies the first condition refers to: DCI format 1_8.

As one embodiment, any one DCI satisfying the first condition schedules a plurality of serving cells.

As one embodiment, any one DCI that schedules only one cell is not DCI that satisfies the first condition.

As one embodiment, in the present application, one DCI is in a DCI format.

As one embodiment, the given serving cell is any serving cell of the Q1 serving cells.

As one embodiment, the total amount of DCI that satisfies the first condition occupying the given serving cell detected in the at least one PDCCH monitoring occasion refers to: the total amount of DCI that satisfies the first condition for the given serving cell detected in the at least one PDCCH monitoring occasion.

As one embodiment, the total amount of DCI that satisfies the first condition occupying the given serving cell detected in the at least one PDCCH monitoring occasion refers to: the total amount of DCI that satisfies the first condition on the given serving cell detected in the at least one PDCCH monitoring occasion.

As one embodiment, the total amount of DCI that satisfies the first condition occupying the given serving cell detected in the at least one PDCCH monitoring occasion refers to: the total amount of DCI that satisfies the first condition transmitted on the given serving cell detected in the at least one PDCCH monitoring occasion.

As one embodiment, the total amount of DCI that satisfies the first condition occupying the given serving cell detected in the at least one PDCCH monitoring occasion refers to: the total amount of DCI on the given serving cell that satisfies the first condition detected in the at least one PDCCH monitoring occasion.

As one embodiment, the total amount of DCI that satisfies the first condition occupying the given serving cell detected in the at least one PDCCH monitoring occasion refers to: the total amount of DCI that satisfies the first condition with the given serving cell as the reference serving cell detected in the at least one PDCCH monitoring occasion.

As one embodiment, for one DCI that schedules a plurality of serving cells, using the given serving cell as the reference serving cell includes the following meanings: the given serving cell is the serving cell of the plurality of serving cells scheduled by this DCI with the smallest serving cell index.

As one embodiment, for one DCI that schedules a plurality of serving cells, using the given serving cell as the reference serving cell includes the following meanings: the given serving cell is the serving cell of the plurality of serving cells scheduled by this DCI with the largest serving cell index.

As one embodiment, for one DCI that schedules a plurality of serving cells, the corresponding reference serving cell is one of the plurality of serving cells being scheduled.

As one embodiment, for one DCI that schedules a plurality of serving cells, the corresponding reference serving cell is determined according to at least one of the scheduling order or the serving cell index.

As one embodiment, for one DCI that schedules a plurality of serving cells, using the given serving cell as the reference serving cell includes the following meanings: according to at least one of the scheduling order or the serving cell index, the given serving cell is determined to be a reference serving cell corresponding to this DCI.

As one embodiment, the said scheduling order includes: the order in which PDSCH is scheduled.

As one embodiment, the said scheduling order includes: the order of the scheduled PDSCH or the time slots occupied by the scheduled PDSCH.

As one embodiment, the said scheduling order includes: the scheduling order of serving cells.

As one embodiment, for one DCI that schedules a plurality of serving cells, using the given serving cell as the reference serving cell includes the following meanings: the given serving cell is the last serving cell scheduled by this DCI.

As one embodiment, for one DCI that schedules a plurality of serving cells, using the given serving cell as the reference serving cell includes the following meanings: the given serving cell is the first serving cell scheduled by this DCI.

As one embodiment, for one DCI that schedules a plurality of serving cells, using the given serving cell as the reference serving cell includes the following meanings: the given serving cell is the serving cell where the last PDSCH scheduled by this DCI is located.

As one embodiment, for one DCI that schedules a plurality of serving cells, using the given serving cell as the reference serving cell includes the following meanings: the given serving cell is the serving cell where the first PDSCH scheduled by this DCI is located.

As one embodiment, for one DCI that schedules a plurality of serving cells, using the given serving cell as the reference serving cell includes the following meanings: the given serving cell is the serving cell where the latest PDSCH scheduled by this DCI is located.

As one embodiment, for one DCI that schedules a plurality of serving cells, using the given serving cell as the reference serving cell includes the following meanings: the given serving cell is the serving cell where the earliest PDSCH scheduled by this DCI is located.

As one embodiment, for one DCI that schedules only one serving cell, the corresponding reference serving cell is the only one serving cell.

As one embodiment, for one DCI that schedules a plurality of serving cells, the corresponding reference serving cell is a serving cell determined according to at least one of the scheduling order or the serving cell index.

As one embodiment, for one DCI that schedules a plurality of serving cells, the corresponding reference serving cell is the last serving cell scheduled by this DCI.

As one embodiment, for one DCI that schedules a plurality of serving cells, the corresponding reference serving cell is the first serving cell scheduled by this DCI.

As one embodiment, for one DCI that schedules a plurality of serving cells, the corresponding reference serving cell is the serving cell where the last PDSCH scheduled by this DCI is located.

As one embodiment, for one DCI that schedules a plurality of serving cells, the corresponding reference serving cell is the serving cell where the first PDSCH scheduled by this DCI is located.

As one embodiment, for one DCI that schedules a plurality of serving cells, the corresponding reference serving cell is the serving cell where the latest PDSCH scheduled by this DCI is located.

As one embodiment, for one DCI that schedules a plurality of serving cells, the corresponding reference serving cell is the serving cell where the earliest PDSCH scheduled by this DCI is located.

As one embodiment, the expressions "last" and "first" are based on default or predefined sorting rules.

As one embodiment, for one DCI that schedules a plurality of serving cells, using the given serving cell as the reference serving cell includes the following meanings: according to default or predefined criteria, the given serving cell is determined to be the reference serving cell for this DCI.

As one embodiment, one DCI that schedules of plurality of serving cells only has one reference serving cell.

As one embodiment, for one DCI that schedules a plurality of serving cells, the corresponding reference serving cell is the serving cell of the number of HARQ-ACK bits used to obtain PUCCH transmit power.

As one embodiment, for one DCI that dispatches a plurality of serving cells, the corresponding reference serving cell is the serving cell used to count {serving cell, PDCCH monitoring occasion} pairs.

As one embodiment, for one DCI that dispatches a plurality of serving cells, the corresponding reference serving cell is the serving cell of the {serving cell, PDCCH monitoring occasion} pair represented by the value of the counter DAI field.

As one embodiment, the expression occupying the given serving cell includes: being on the given serving cell.

As one embodiment, for a DCI, the occupied serving cell is: the serving cell used to transmit this DCI.

As one embodiment, the expression occupying the given serving cell includes: being for the given serving cell.

As one embodiment, the relationship between a detected DCI and the serving cell occupied by the detected DCI is as follows: this detected DCI is detected in PDCCH on the occupied serving cell.

As one embodiment, the first condition is: scheduling a plurality of serving cells.

As an embodiment, the first condition comprises: scheduling a plurality of serving cells.

As one embodiment, the first condition comprises a plurality of sub-conditions, one of which is: scheduling a plurality of serving cells.

As one sub-embodiment of the above embodiment, satisfying the first condition refers to satisfying each sub-condition of the plurality of sub-conditions.

As one embodiment, one of the plurality of sub-conditions is related to PDSCH.

As one embodiment, one of the plurality of sub-conditions is: scheduling a plurality of PDSCHs that do not overlap with uplink symbols.

As one embodiment, one of the plurality of sub-conditions is: the scheduled PDSCH corresponds to HARQ-ACK information based on the transport block.

As one embodiment, one of the plurality of sub-conditions is: being used for unicasting.

As one embodiment, one of the plurality of sub-conditions is: being used for multicasting.

As one embodiment, the first DCI is a DCI that satisfies the first condition.

As one embodiment, the first DCI is the last DCI that satisfies the first condition for at least one serving cell.

As one embodiment, the first DCI is the last DCI that satisfies the first condition for any one of the Q1 serving cells.

As one embodiment, the first DCI is the last DCI detected in the at least one PDCCH monitoring occasion that satisfies the first condition.

As one embodiment, the first DCI is the last DCI detected in the at least one PDCCH monitoring occasion that satisfies the first condition and occupies any one of the Q1 serving cells.

As one embodiment, a serving cell scheduled by a DCI refers to: a cell that is scheduled by this DCI.

As one embodiment, when one DCI schedules at least one PDSCH on a serving cell, this DCI is the DCI that schedules this serving cell.

As one embodiment, when one DCI schedules at least one PDSCH on each serving cell of a plurality of serving cells, this DCI is the DCI that schedules the plurality of serving cells.

As one embodiment, when one DCI indicates scheduling information for each serving cell of a plurality of serving cells, this DCI is the DCI that schedules the plurality of serving cells.

As one embodiment, when one DCI includes PDSCH scheduling information on each serving cell of a plurality of serving cells, this DCI is the DCI that schedules the plurality of serving cells.

As one embodiment, the scheduling information includes information on the allocation of frequency domain resources.

As one embodiment, the scheduling information includes information on the allocation of time domain resources.

As one embodiment, the scheduling information includes MCS (modulation and coding scheme) information.

As one embodiment, the scheduling information includes DMRS (demodulation reference signals) configuration information.

As one embodiment, the scheduling information includes HARQ (hybrid automatic repeat request) process number information.

As one embodiment, the scheduling information includes RV (redundancy version) information.

As one embodiment, the scheduling information includes NDI (new data indicator) information.

As one embodiment, the scheduling information includes transmitting antenna port information.

As one embodiment, the scheduling information includes TCI (transmission configuration indicator) information.

As one embodiment, the expression the first power depends on at least a value of the first field in the first DCI and Q1 components includes: the first power depends on at least a value of the first field in the first DCI and a sum of Q1 components.

As one embodiment, the value of the first field in the first DCI and the Q1 components together indicate the first power.

As one embodiment, the value of the first field in the first DCI and the Q1 components are used to configure the first power.

As one embodiment, the expression the first power depends on at least a value of the first field in the first DCI and Q1 components includes:
the first power depends on at least a value of the field domain in the first DCI; the first power is equal to the smaller of an upper limit power and a target power, the target power is equal to the sum of a plurality of power components, one of the plurality of power components is equal to 10*log*₁₀ (*K*₁ · first value/second value) , the second value is the number of resource elements used for PUCCH transmission, the first value is equal to the sum of a plurality of values, one of the plurality of values is equal to a positive integer multiple of the result of taking the difference of the value of the first field in the first DCI minus the sum of Q1 components modulo a third value, and the third value is equal to 2 to the power of V, where V is equal to the number of bits in a DAI field.

As one embodiment, the V is equal to the number of bits of a counter DAI field.

As one embodiment, the number of bits of a DAI field includes the following meaning: the size of this DAI field.

As one embodiment, the expression the first power depends on at least a value of the first field in the first DCI and Q1 components includes:
the first power is equal to the smaller of an upper limit power and a target power, the target power is equal to the sum of a plurality of power components, and at least one power component of the plurality of power components depends on a value of the first field in the first DCI and Q1 components.

As one embodiment, the value of the first field in the first DCI and the Q1 components together indicate at least one power component of the plurality of power components.

As one embodiment, the value of the first field in the first DCI and the Q1 components are used to configure at least one power component of the plurality of power components.

As one embodiment, the expression the first power depends on at least a value of the first field in the first DCI and Q1 components includes:
the first power is equal to the smaller of an upper limit power and a target power, the target power is equal to the sum of a plurality of power components, at least one power component of the plurality of power components depends on a first reference value, the first reference value is the number of HARQ-ACK bits used to obtain PUCCH transmit power, and the first reference value depends on the value of the first field in the first DCI and the Q1 components.

As one embodiment, the express "the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition" includes: The first power depends on at least a value of the first field in the first DCI and the total amount of DCI that satisfies a first condition detected in the at least one PDCCH monitoring occasion.

As one embodiment, the express "the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition" and the expression "the first power depends on at least a value of the first field in the first DCI and the total amount of DCI that satisfies a first condition detected in the at least one PDCCH monitoring occasion" are equivalent or interchangeable.

As one embodiment, the first power is equal to the smaller of an upper limit power and a target power, the target power is equal to the sum of a plurality of power components, one of the plurality of power components is equal to 10*log*₁₀(*K*₁ · first value/second value), the second value is the number of resource elements used for PUCCH transmission, the first value is equal to the sum of a plurality of values, one of the plurality of values is equal to a positive integer multiple of the result of taking the difference of the value of the first field in the first DCI and the total amount of DCI detected in the at least one PDCCH monitoring occasion that satisfies the first condition modulo a third value, and the third value is equal to 2 to the power of V, where V is equal to the number of bits in a DAI field.

As one embodiment, the first power is equal to the smaller of an upper limit power and a target power, the target power is equal to the sum of a plurality of power components, and at least one power component of the plurality of power components depends on the value of the first field in the first DCI and the total amount of DCI detected in the at least one PDCCH monitoring occasion that satisfies the first condition.

As one embodiment, the first power is equal to the smaller of an upper limit power and a target power, the target power is equal to the sum of a plurality of power components, at least one power component of the plurality of power components depends on a first reference value, the first reference value is the number of HARQ-ACK bits used to obtain PUCCH transmit power, and the first reference value depends on the value of the first field in the first DCI and the total amount of DCI detected in the at least one PDCCH monitoring occasion that satisfies the first condition.

As one embodiment, the total amount of DCI that satisfies the first condition detected in the at least one PDCCH monitoring occasion refers to: the total amount of DCI that satisfies the first condition occupying any serving cell of Q1 serving cells detected in the at least one PDCCH monitoring occasion.

As one embodiment, the total amount of DCI that satisfies the first condition detected in the at least one PDCCH monitoring occasion refers to: the total amount of DCI that satisfies the first condition for any serving cell of Q1 serving cells detected in the at least one PDCCH monitoring occasion.

As one embodiment, the total amount of DCI that satisfies the first condition detected in the at least one PDCCH monitoring occasion refers to: the total amount of DCI that satisfies the first condition on any serving cell of Q1 serving cells detected in the at least one PDCCH monitoring occasion.

As one embodiment, the total amount of DCI that satisfies the first condition detected in the at least one PDCCH monitoring occasion refers to: the total amount of DCI that satisfies the first condition transmitted on any serving cell of Q1 serving cells detected in the at least one PDCCH monitoring occasion.

As one embodiment, the total amount of DCI that satisfies the first condition detected in the at least one PDCCH monitoring occasion refers to: the total amount of DCI on any serving cell of Q1 serving cells that satisfies the first condition detected in the at least one PDCCH monitoring occasion.

As one embodiment, the at least one PDCCH monitoring occasion is configurable.

As one embodiment, for the at least one PDCCH monitoring occasion, the first node sends HARQ-ACK information in the same PUCCH in a time slot.

As one embodiment, the HARQ-ACK information for the at least one PDCCH monitoring occasion is sent in the same PUCCH in a time slot.

As one embodiment, the at least one PDCCH monitoring occasion is for the same PUCCH time slot.

As one embodiment, the at least one PDCCH monitoring occasion is for the time slot occupied by the transmission of the first PUCCH.

As one embodiment, the number of UCI bits in the first PUCCH is not greater than 11.

As one embodiment, the number of UCI bits in the first PUCCH is greater than 2.

As one embodiment, up to 11 UCI bits are sent in the first PUCCH.

As one embodiment, at least 3 UCI bits are sent in the first PUCCH.

### Embodiment 2

Embodiment 2 illustrates a schematic diagram according to one network architecture of the present application, as shown in FIG. 2.

FIG. 2 illustrates a network architecture 200 of a 5G NR, LTE (Long-Term Evolution), and LTE-A (Long-Term Evolution Advanced) system. The 5G NR or LTE network architecture 200 may be referred to as EPS (Evolved Packet System) 200 or some other suitable term. The EPS 200 may include one or more UE (User Equipment) 201, an NG-RAN (next generation wireless access network) 202, an EPC (Evolved Packet Core)/5G-CN (5G-Core Network) 210, an HSS (Home Subscriber Server, owned by the contracted user server) 220, and Internet service 230. The EPS may be interconnected with other access networks, but these entities/interfaces are not shown for simplicity. As shown in the figure, the EPS provides packet exchange services. However, it will be readily understood by those skilled in the art that various concepts presented throughout the present application can be extended to a network providing circuit exchange services. NG-RAN includes NR node B (gNB) 203 and other gNB 204. The gNB 203 provides user and control plane protocol termination towards the UE 201. The gNB 203 may be connected to the other gNB 204 via an Xn interface (e.g., backhaul). The gNB 203 may also be referred to as a base station, a base station transceiver, a radio base station, a radio transceiver, a transceiver function, a base service set (BSS), an extension service set (ESS), a TRP (transmitter receiver node), or some other suitable term. gNB203 provides access points to EPC/5G-CN 210 for UE 201. Embodiments of the UE 201 include cellular phones, smart phones, session initiation protocol (SIP) phones, laptop computers, personal digital assistants (PDA), satellite radios, non-ground base station communications, satellite mobile communications, global positioning systems, multimedia devices, video devices, digital audio players (e.g., MP3 players), cameras, game consoles, drones, aircrafts, narrow band Internet of Things devices, machine type communications devices, land vehicles, automobiles, wearable devices, or any other similar function devices. Those of ordinary skill in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld, a user agent, a mobile client, a client, or some other suitable term. The gNB 203 is connected to the EPC/5G-CN 210 via an S1/NG interface. The EPC/5G-CN 210 includes an MME (Mobility Management Entity)/AMF (Authentication Management Field)/UPF (User Plane Function) 211, another MME/AMF/UPF 214, an S-GW (Service Gateway) 212, and a P-GW (Packet Data Network Gateway) 213. MME/AMF/UPF 211 is a control node that handles signaling between UE 201 and EPC/5G-CN 210. Generally, the MME/AMF/UPF 211 provides carrier and connection management. All user IP (Internet Protocol) packets are transmitted via the S-GW 212, which is itself connected to the P-GW 213. The P-GW 213 provides UE IP address assignment along with other functions. The P-GW 213 is connected to the Internet service 230. The Internet service 230 includes an operator's corresponding Internet protocol service, which may include, inter alia, the Internet, an intranet, an IMS (IP Multimedia Subsystem), and a packet switching stream service.

As one embodiment, the UE 201 corresponds to the first node in the present application.

As one embodiment, the UE 201 corresponds to the second node in the present application.

As one embodiment, the UE 201 is a UE.

As one embodiment, the UE 201 is a RedCap UE.

As one embodiment, the UE 201 is a conventional UE.

As one embodiment, the UE 201 is a UE with high processing capabilities.

As one embodiment, the gNB 203 corresponds to the first node in the present application.

As one embodiment, the gNB 203 corresponds to the second node in the present application.

As one embodiment, the UE 201 corresponds to the first node in the present application and the gNB 203 corresponds to the second node in the present application.

As one embodiment, the gNB 203 is a macrocell.

As one embodiment, the gNB 203 is a microcell.

As one embodiment, the gNB 203 is a picocell.

As one embodiment, the gNB 203 is a femtocell.

As one embodiment, the gNB 203 is a base station device that supports large latency differences.

As one embodiment, the gNB 203 is a flying platform device.

As one embodiment, the gNB 203 is a satellite device.

As one embodiment, both the first and second nodes in the present application correspond to the UE 201, e.g., V2X communication is performed between the first node and the second node.

### Embodiment 3

Embodiment 3 illustrates a schematic diagram of an embodiment of a wireless protocol architecture for a user plane and a control plane according to one embodiment of the present application, as shown in FIG. 3. FIG. 3 is a schematic diagram illustrating an embodiment of a radio protocol architecture for a user plane 350 and a control plane 300. FIG. 3 shows, with three layers, a radio protocol architecture for a control plane 300 between a first communication node device (RSU in UE, gNB, or V2X) and a second communication node device (RSU in gNB, UE, or V2X) or between two UEs: layers 1, 2 and 3. The layer 1 (L1 layer) is the lowest layer and implements various PHY (physical layer) signal processing functions. The L1 layer will be referred to herein as PHY 301. The layer 2 (L2 layer) 305 is over the PHY 301 and is responsible for the link between the first communication node device and the second communication node device or between two UEs through the PHY 301. The L2 layer 305 includes a MAC (Medium Access Control) sublayer 302, an RLC (Radio Link Control) sublayer 303, and a PDCP (Packet Data Convergence Protocol) sublayer 304, and these sublayers terminate at the second communication node device. The PDCP sublayer 304 provides multiplexes between different radio carriers and logical channels. The PDCP sublayer 304 also provides security by encrypting the data packet and trans-regional movement support for the first communication node device between the second communication node device. The RLC sublayer 303 provides segmentation and reassembly of the upper layer data packet, retransmission of the missing data packet, and reordering of the data packet to compensate for out-of-order reception due to HARQ. The MAC sublayer 302 provides multiplex between logical and transmission channels. The MAC sublayer 302 is also responsible for distributing various radio resources (e.g., resource blocks) in one cell between the first communication node devices. The MAC sublayer 302 is also responsible for HARQ operations. The RRC (Radio Resource Control) sublayer 306 in layer 3 (L3 layer) in the control plane 300 is responsible for obtaining the radio resources (i.e., radio carrier) and configuring the lower layer using RRC signaling between the second communication node device and the first communication node device. The radio protocol architecture of the user plane 350 includes a layer 1 (L1 layer) and a layer 2 (L2 layer). The radio protocol architecture for the first and second communication node devices in the user plane 350 for the physical layer 351, the PDCP sublayer 354 in the L2 layer 355, the RLC sublayer 353 in the L2 layer 355, and the MAC sublayer 352 in the L2 layer 355 is substantially the same as the corresponding layer and the sublayer in the control plane 300. However, the PDCP sublayer 354 also provides header compression for upper layer data packets to reduce radio transmission overhead. The L2 layer 355 in the user plane 350 also includes an SDAP (Service Data Adaption Protocol) sublayer 356 that is responsible for mapping between QoS streams and data radio bearer (DRB) to support diversity of the business. Although not shown, the first communication node device may have several upper layers over the L2 layer 355, including a network layer (e.g., an IP layer) that terminates at the P-GW on the network side and an application layer that terminates at the other end of the connection (e.g., a far-end UE, a server, etc.).

As one embodiment, the wireless protocol architecture in FIG. 3 applies to the first node in the present application.

As one embodiment, the wireless protocol architecture in FIG. 3 applies to the second node in the present application.

As one embodiment, the first DCI in the present application is generated in the PHY 301.

As one embodiment, the first PUCCH in the present application is generated in the PHY 301.

### Embodiment 4

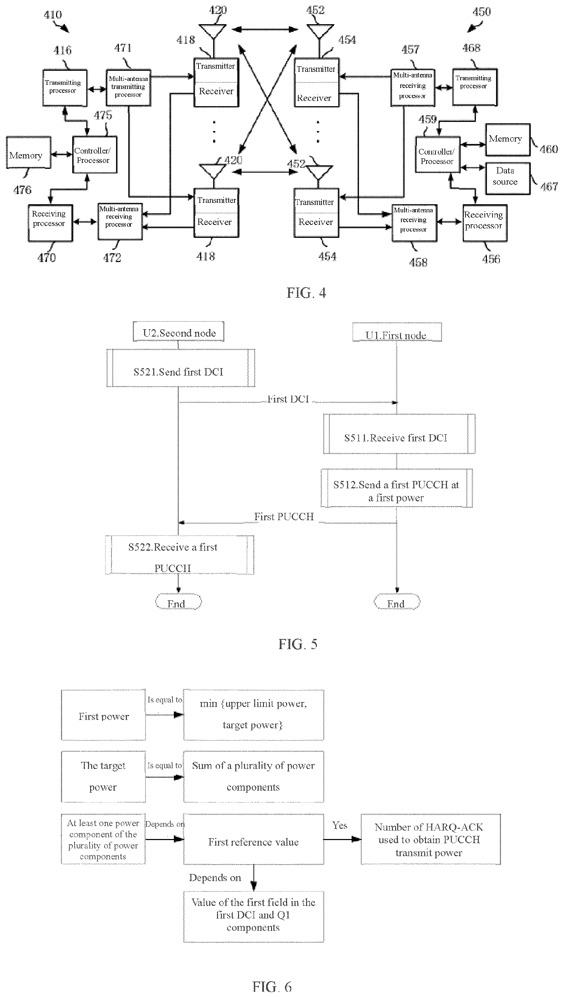

Embodiment 4 shows a schematic diagram of a first communications device and a second communications device according to the present application, as shown in FIG. 4. FIG. 4 is a block diagram of a first communications device 410 and a second communications device 450 in communication with one another over an access network.

The first communications device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communications device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In a transmission from the first communications device 410 to the second communications device 450, at the first communications device 410, an upper layer data packet from the core network is provided to the controller/processor 475. The controller/processor 475 implements the functionality of the L2 layer. In the transmission from the first communications device 410 to the first communications device 450, the controller/processor 475 provides header compression, encryption, packet segmentation and reordering, multiplexing between logical and transmission channels, and radio resource allocation to the second communications device 450 based on various priority measures. The controller/processor 475 is also responsible for retransmission of the lost package and signaling to the second communications device 450. The transmitting processor 416 and the multi-antenna transmission processor 471 implement various signal processing functions for the L1 layer (i.e., the physical layer). The transmitting processor 416 implements coding and interleaving to facilitate forward error correction (FEC) at the second communications device 450 as well as mapping of signal clusters based on various modulation schemes (e.g., bi-phase shift keying (BPSK), orthogonal phase shift keying (QPSK), M-phase shift keying (M-PSK), and M-quadrature amplitude modulation (M-QAM)). The multi-antenna transmitting processor 471 pre-codes encoded and modulated symbols in digital space, including codebook-based pre-coding and non-codebook-based pre-coding, and beam-forming processing to generate one or more spatial streams. The transmitting processor 416 then maps each spatial stream to the sub-carrier, multiplexes with a reference signal (e.g., frequency direct) in the time and/or frequency domain, and then uses an inverse fast Fourier transform (IFFT) to produce a physical channel that carries the time domain multi-carrier symbol flow. The multi-antenna transmitting processor 471 then sends the simulated pre-coding/beam-forming operation for the time domain multi-carrier symbol flow. Each transmitter 418 converts the baseband multi-carrier symbol flow provided by the multi-antenna transmitting processor 471 into a radio frequency flow, which is then provided to a different antenna 420.

In transmission from the first communications device 410 to the second communications device 450, at the second communications device 450, each receiver 454 receives a signal through its respective antenna 452. Each receiver 454 resumes information modulated onto a radio frequency carrier and converts the radio frequency flow into a baseband multi-carrier symbol flow to the receiving processor 456. The receiving processor 456 and the multi-antenna receiving processor 458 implement various signal processing functions of the L1 layer. The multi-antenna receiving processor 458 receives the simulated pre-coding/beam-forming operation for the baseband multi-carrier symbol flow from the receiver 454. The receiving processor 456 uses a Fast Fourier Transform (FFT) to transition the baseband multi-carrier symbol flow from the time domain to the frequency domain after receiving the simulated pre-coding/beam-forming operation. In the frequency domain, the physical layer data signal and the reference signal are demultiplexed by the receiving processor 456 where the reference signal is used for channel estimation and the data signal is detected by the multi-antenna receiving processor 458 to recover any spatial stream destined for the second communications device 450. The symbols on each spatial stream are demodulated and restored in the receiving processor 456 and generate a soft decision. The receiving processor 456 then decodes and de-interleaves the soft decision to resume the upper layer data and control signal transmitted by the first communications device 410 over the physical channel. The upper layer data and control signal are then provided to the controller/processor 459. The controller/processor 459 implements the functions of the L2 layer. The controller/processor 459 may be associated with a memory 460 that stores program code and data. The memory 460 may be referred to as a computer-readable medium. In transmission from the first communications device 410 to the second communications device 450, the controller/processor 459 provides demultiplexing between transmission and logical channels, packet reassembly, decryption, header decompression, and control signal processing to recover the upper layer data packet from the core network. The upper layer data packet is then provided to all protocol layers above the L2 layer. Various control signals may also be provided to L3 for L3 processing.

In transmission from the second communications device 450 to the first communications device 410, at the second communications device 450, the data source 467 is used to provide the upper layer data packet to the controller/processor 459. The data source 467 represents all protocol layers above the L2 layer. Similar to the transmission function at the first communications device 410 described in transmission from the first communications device 410 to the second communications device 450, the controller/processor 459 implements header compression, encryption, packet segmentation, and reordering, and multiplexing between logical and transmission channels based on wireless resource allocation, implementing L2 layer functions for the user plane and control plane. The controller/processor 459 is also responsible for retransmission of the lost package and signaling to the first communications device 410. The transmitting processor 468 executes modulation mapping and channel encoding and the multi-antenna transmitting processor 457 pre-encodes the digital multi-antenna space, including codebook-based pre-coding and non-codebook-based pre-coding, and beam-forming processing, and then the transmitting processor 468 modulates the resulting spatial stream into multi-carrier/single-carrier symbol flows, which, after simulated precoding/beam-forming operations in the multi-antenna transmitting processor 457, are then provided to a different antenna 452 via the transmitter 454. Each transmitter 454 first converts the baseband symbol flow provided by the multi-antenna transmitting processor 457 into a radio frequency symbol flow, which is then provided to the antenna 452.

In the transmission from the second communications device 450 to the first communications device 410, the function at the first communications device 410 is similar to the receiving function at the second communications device 450 described in the transmission from the first communications device 410 to the second communications device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1 layer. The controller/processor 475 implements the function of the L2 layer. The controller/processor 475 may be associated with the memory 476 storing program code and data. The memory 476 may be referred to as a computer-readable medium. In transmission from the second communications device 450 to the first communications device 410, the controller/processor 475 provides demultiplexing between transmission and logical channels, packet reassembly, decryption, header decompression, and control signal processing to recover the upper layer data packet from the UE 450. The upper layer data packet from the controller/processor 475 may be provided to the core network.

As one embodiment, the first node in the present application includes the second communications device 450 and the second node in the present application includes the first communications device 410.

As one sub-embodiment of the above embodiment, the first node is a user device and the second node is a user device.

As one sub-embodiment of the above embodiment, the first node is a user device and the second node is a relay node.

As one sub-embodiment of the above embodiment, the first node is a relay node and the second node is a user device.

As one sub-embodiment of the above embodiment, the first node is a user device and the second node is a base station device.

As one sub-embodiment of the above embodiment, the first node is a relay node and the second node is a base station device.

As one sub-embodiment of the above embodiment, the second node is a user device and the first node is a base station device.

As one sub-embodiment of the above embodiment, the second node is a relay node and the first node is a base station device.

As one sub-embodiment of the above embodiment, the second communications device 450 includes: at least one controller/processor; the at least one controller/processor is responsible for HARQ operation.

As one sub-embodiment of the above embodiment, the first communications device 410 includes: at least one controller/processor; the at least one controller/processor is responsible for HARQ operation.

As one sub-embodiment of the above embodiment, the first communications device 410 includes: at least one controller/processor; the at least one controller/processor is responsible for error detection using a positive acknowledgement (ACK) and/or negative acknowledgement (NACK) protocol to support HARQ operation.

As one embodiment, the second communications device 450 includes: at least one processor, and at least one memory comprising computer program code; the at least one memory and the computer program code configured for use with the at least one processor. The second communications device 450 device at least: receives first DCI, the first DCI comprising a first field; sends a first PUCCH at a first power; wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition, and one DCI satisfying the first condition schedules a plurality of serving cells.

As one sub-embodiment of the above embodiment, the second communications device 450 corresponds to the first node in the present application.

As one embodiment, the second communications device 450 includes: a memory storing a computer-readable instruction program that, when executed by at least one processor, generates an action, the action comprising: receiving first DCI, the first DCI comprising a first field; sending a first PUCCH at a first power; wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition, and one DCI satisfying the first condition schedules a plurality of serving cells.

As one sub-embodiment of the above embodiment, the second communications device 450 corresponds to the first node in the present application.

As one embodiment, the first communications device 410 includes: at least one processor, and at least one memory comprising computer program code; the at least one memory and the computer program code configured for use with the at least one processor. The first communications device 410 device at least: sends first DCI, the first DCI comprising a first field; receives a first PUCCH sent at a first power; wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected by the transmitting end of the first PUCCH in at least one PDCCH monitoring occasion, occupies the given serving cell, and satisfies a first condition, and one DCI satisfying the first condition schedules a plurality of serving cells.

As one sub-embodiment of the above embodiment, the first communications device 410 corresponds to the second node in the present application.

As one embodiment, the first communications device 410 includes: a memory storing a computer-readable instruction program that, when executed by at least one processor, generates an action, the action comprising: sending first DCI, the first DCI comprising a first field; receiving a first PUCCH sent at a first power; wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected by the transmitting end of the first PUCCH in at least one PDCCH monitoring occasion, occupies the given serving cell, and satisfies a first condition, and one DCI satisfying the first condition schedules a plurality of serving cells.

As one sub-embodiment of the above embodiment, the first communications device 410 corresponds to the second node in the present application.

As one embodiment, at least one of {the antenna 452, the receiver 454, the multi-antenna receiving processor 458, the receiving processor 456, the controller/processor 459, the memory 460, and the data source 467} is used to receive the first DCI in the present application.

As one embodiment, at least one of {the antenna 420, the transmitter 418, the multi-antenna transmitting processor 471, the transmitting processor 416, the controller/processor 475, and the memory 476} is used to send the first DCI in the present application.

As one embodiment, at least one of {the antenna 452, the transmitter 454, the multi-antenna transmitting processor 458, the transmitting processor 468, the controller/processor 459, the memory 460, and the data source 467} is used to send the first PUCCH in the present application.

As one embodiment, at least one of {the antenna 420, the receiver 418, the multi-antenna receiving processor 472, the receiving processor 470, the controller/processor 475, and the memory 476} is used to receive the first PUCCH in the present application.

### Embodiment 5

Embodiment 5 illustrates a flow chart of signal transmission according to one embodiment of the present application, as shown in FIG. 5. In FIG. 5, the first node U1 and the second node U2 communicate with each other via an air interface.

The first node U1 receives the first DCI in step S511; and sends the first PUCCH in step S512 at a first power.

The second node U2 sends the first DCI in step S521; and receives the first PUCCH in step S522.

In Embodiment 5, the first DCI comprises a first field; the first power depends on the value of the first field in the first DCI and Q1 components; the Q1 components correspond to Q1 serving cell; the given serving cell is one of the Q1 serving cells; for the given serving cell, the corresponding component is equal to the total amount of DCI occupying the given serving cell and satisfying the first condition that is detected in at least one PDCCH monitoring occasion, and a DCI satisfying the first condition schedules multiple serving cells; the first power is equal to the smaller of an upper limit power and a target power, the target power is equal to the sum of a plurality of power components, at least one power component of the plurality of power components depends on a first reference value, the first reference value is the number of HARQ-ACK bits used to obtain PUCCH transmit power, and the first reference value depends on the value of the first field in the first DCI and the Q1 components; and the first reference value is equal to the sum of a plurality of intermediate values, one of the plurality of intermediate values is equal to a positive integer multiple of the result of taking the difference of the value of the first field in the first DCI minus the sum of the Q1 components modulo a third value, and the third value is equal to 2 to the power of V, where V is equal to the number of bits in a DAI field.

As one sub-embodiment of Embodiment 5, the total amount of DCI that satisfies the first condition occupying the given serving cell detected in the at least one PDCCH monitoring occasion refers to: the total amount of DCI that satisfies the first condition for the given serving cell detected in the at least one PDCCH monitoring occasion.

As one sub-embodiment of Embodiment 5, the total amount of DCI that satisfies the first condition occupying the given serving cell detected in the at least one PDCCH monitoring occasion refers to: the total amount of DCI that satisfies the first condition on the given serving cell detected in the at least one PDCCH monitoring occasion.

As one sub-embodiment of Embodiment 5, the total amount of DCI that satisfies the first condition occupying the given serving cell detected in the at least one PDCCH monitoring occasion refers to: the total amount of DCI that satisfies the first condition with the given serving cell as the reference serving cell detected in the at least one PDCCH monitoring occasion; for DCI scheduling multiple serving cells, the corresponding reference serving cell is determined according to at least one of the scheduling order or the serving cell index.

As one embodiment, the first node U1 is the first node in the present application.

As one embodiment, the second node U2 is the second node in the present application.

As one embodiment, the first node U1 is a UE.

As one embodiment, the first node U1 is a base station.

As one embodiment, the second node U2 is a base station.

As one embodiment, the second node U2 is a UE.

As one embodiment, the air interface between the second node U2 and the first node U1 is a Uu interface.

As one embodiment, the air interface between the second node U2 and the first node U1 includes a cellular link.

As one embodiment, the air interface between the second node U2 and the first node U1 is a PC5 interface.

As one embodiment, the air interface between the second node U2 and the first node U1 includes a sidelink.

As one embodiment, the air interface between the second node U2 and the first node U1 includes a wireless interface between a base station device and a user device.

As one embodiment, the air interface between the second node U2 and the first node U1 includes a wireless interface between a satellite device and a user device.

As one embodiment, the air interface between the second node U2 and the first node U1 includes a wireless interface between a user device and a user device.

As an embodiment, issues to be addressed by the present application include: determining the transmit power of the first PUCCH.

As an embodiment, issues to be addressed by the present application include: determining PUCCH transmit power based on the detection of DCI for scheduling multiple serving cells.

As an embodiment, issues to be addressed by the present application include: improving PUCCH transmission performance.

As an embodiment, issues to be addressed by the present application include: reducing inter-user interference.

As an embodiment, issues to be addressed by the present application include: achieving more accurate power control for PUCCH.

As an embodiment, issues to be addressed by the present application include: optimizing the ability of a single DCI to schedule multiple serving cells.

### Embodiment 6

Embodiment 6 illustrates a schematic diagram of the relationship between a first power, an upper limit power, a target power, a first reference value, a value of a first field in a first DCI, and Q1 components according to one embodiment of the present application, as shown in FIG. 6.

In Embodiment 6, the first power is equal to the smaller of an upper limit power and a target power, the target power is equal to the sum of a plurality of power components, at least one power component of the plurality of power components depends on a first reference value, the first reference value is the number of HARQ-ACK bits used to obtain PUCCH transmit power, and the first reference value depends on the value of the first field in the first DCI and the Q1 components.

As one embodiment, the target power is related to the first reference value.

As one embodiment, the target power depends on the first reference value.

As one embodiment, the first reference value is used to indicate at least one power component of the plurality of power components.

As one embodiment, the first reference value is used to configure at least one power component of the plurality of power components.

As one embodiment, the plurality of power components includes a first power component that depends on the first reference value, the first power component being a PUCCH transmit power adjustment component Δ_{TF,*b*,*f,c*}(*i*)represented in Section 7.2.1 of 3GPP TS 38.213.

As one embodiment, the plurality of power components comprises a first power component that depends on the first reference value; the first power component is equal to 10*log*₁₀(*K*₁ · (first reference value + second reference value + third reference value)/second value) , the second value is the number of at least part of the resource elements (REs) occupied by the transmission of PUCCH, the second reference value is the number of SR information bits, and the third reference value is the number of CSI information bits.

As one embodiment, the plurality of power components comprises a first power component that depends on the first reference value; the first power component is equal to 10*log*₁₀(2^{BPRE·*K*₂} - 1), the BPRE is equal to (first reference value + second reference value + third reference value + fourth reference value)/second value , the second value is the number of at least part of the resource elements (REs) occupied by the transmission of PUCCH, the second reference value is the number of SR (scheduling request) information bits, the third reference value is the number of CSI (channel state information) information bits, the fourth reference value is the number of CRC bits, and the *K*₂ is equal to 2.4.

As one embodiment, the second value is the number of at least part of the resource elements occupied by the transmission of the first PUCCH.

As one embodiment, the second value is the number of resource elements used for the transmission of the first PUCCH.

As one embodiment, the second value is the number of at least part of the resource elements occupied by the transmission of a PUCCH other than the first PUCCH.

As one embodiment, the first reference value is equal to the sum of a plurality of intermediate values, one of the plurality of intermediate values is equal to a positive integer multiple of the result of taking the difference of the value of the first field in the first DCI minus the sum of the Q1 components modulo a third value, and the third value is equal to 2 to the power of V, where V is equal to the number of bits in a DAI field.

As one embodiment, the V is equal to the number of bits of a counter DAI field.

As one embodiment, the V is equal to the number of bits of a total DAI field.

As one embodiment, the V is equal to the number of bits of the counter DAI field in the first DCI.

As one embodiment, the V is equal to the number of bits of the total DAI field in the first DCI.

As one embodiment, the value of the first field in the first DCI and the Q1 components together indicate the first reference value.

As one embodiment, the first reference values depends on the value of the first field in the first DCI and the Q1 components.

As one embodiment, the first reference value is equal to the sum of a plurality of intermediate values, one of the plurality of intermediate values is equal to the product of the result of taking the difference of the value of the first field in the first DCI minus the sum of the Q1 components modulo a third value and N1, and the third value is equal to 2 to the power of V, where V is equal to the number of bits in a DAI field.

As one embodiment, the N1 is a positive integer.

As one embodiment, the N1 is configurable.

As one embodiment, the N1 depends on the maximum number of serving cells scheduled by a DCI that satisfies the first condition.

As one embodiment, the N1 is not greater than the maximum number of serving cells scheduled by a DCI that satisfies the first condition.

As one embodiment, the N1 is not greater than the maximum number of PDSCH scheduled by a DCI that satisfies the first condition.

As one embodiment, the N1 is not greater than the maximum number of transport blocks scheduled by a DCI that satisfies the first condition.

As one embodiment, one of the plurality of intermediate values is a non-negative integer.

As one embodiment, one of the plurality of intermediate values is equal to 0.

As one embodiment, one of the plurality of intermediate values is greater than 0.

As one embodiment, one of the plurality of intermediate values is configurable.

As one embodiment, one of the plurality of intermediate values is a constant.

As one embodiment, one of the plurality of intermediate values depends on the number of PDSCHs scheduled by at least one DCI satisfying the first condition that is detected.

As one embodiment, one of the plurality of intermediate values is equal to the number of PDSCHs scheduled by at least one DCI that occupies the given serving cell and meets the first condition detected in the at least one PDCCH monitoring occasion.

As one embodiment, one of the plurality of intermediate values is equal to the number of PDSCHs scheduled on one serving cell by at least one DCI that meets the first condition detected in the at least one PDCCH monitoring occasion.

As one embodiment, one of the plurality of intermediate values is equal to the number of PDSCHs in one serving cell.

As one embodiment, one of the plurality of intermediate values depends on the number of transport blocks scheduled by at least one DCI satisfying the first condition that is detected.

As one embodiment, one of the plurality of intermediate values is equal to the number of transport blocks in the PDSCH scheduled by at least one DCI that occupies the given serving cell and meets the first condition detected in the at least one PDCCH monitoring occasion.

As one embodiment, one of the plurality of intermediate values is equal to the number of transport blocks in the PDSCH scheduled on one serving cell by at least one DCI that meets the first condition detected in the at least one PDCCH monitoring occasion.

As one embodiment, one of the plurality of intermediate values is equal to the number of transport blocks in the PDSCH in one serving cell.

As one embodiment, taking a value modulo another value means: the one value mod the other value.

### Embodiment 7

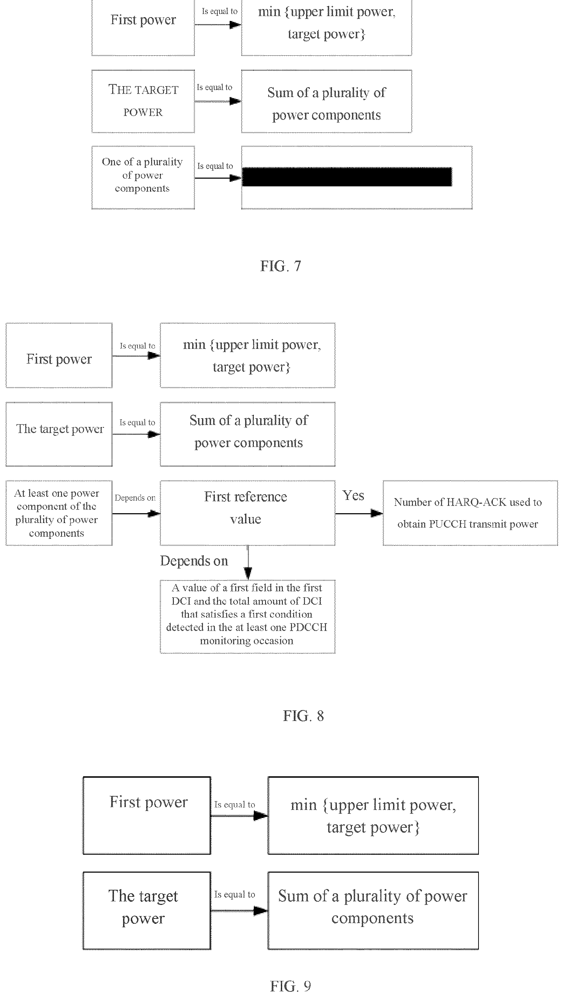

Embodiment 7 illustrates a schematic diagram of the relationship between a first power, an upper limit power, a target power, a first value, and a second value according to one embodiment of the present application, as shown in FIG. 7.

In Embodiment 7, the first power is equal to the smaller of an upper limit power and a target power, the target power is equal to the sum of a plurality of power components, one of the plurality of power components is equal to 10*log*₁₀ (*K*₁ · first value/second value), the second value is the number of at least part of the resource elements occupied by PUCCH transmission, the first value is equal to the sum of a plurality of values, one of the plurality of values is equal to a positive integer multiple of the result of taking the difference of the value of the first field in the first DCI minus the sum of the Q1 components modulo a third value, and the third value is equal to 2 to the power of V, where V is equal to the number of bits in a DAI field.

As one embodiment, the first value is equal to the sum of a plurality of values, one of the plurality of values is equal to a positive integer multiple of the result of taking the difference of the value of the first field in the first DCI minus the sum of the Q1 components modulo a third value, and the third value is equal to 2 to the power of V, where V is equal to the number of bits in a DAI field.

As one embodiment, one of the plurality of values is the number of SR information bits.

As one embodiment, one of the plurality of values is the number of CSI information bits.

As one embodiment, one of the plurality of values is equal to 0.

As one embodiment, one of the plurality of values is a non-negative integer.

As one embodiment, one of the plurality of values is configurable.

As one embodiment, one of the plurality of values is a constant.

As one embodiment, one of the plurality of values depends on the number of PDSCHs scheduled by a DCI satisfying the first condition that is detected.

As one embodiment, one of the plurality of values depends on the number of transport blocks scheduled by a DCI satisfying the first condition that is detected.

As one embodiment, the first reference value is one of the plurality of values.

As one embodiment, the first reference value is equal to the sum of at least 2 of the plurality of values.

### Embodiment 8

Embodiment 8 illustrates a schematic diagram of the relationship between a first power, an upper limit power, a target power, a first reference value, a value of a first field in a first DCI, and the total amount of DCI satisfying a first condition detected in at least one PDCCH monitoring occasion according to one embodiment of the present application, as shown in FIG. 8.

In Embodiment 8, the first power is equal to the smaller of an upper limit power and a target power, the target power is equal to the sum of a plurality of power components, at least one power component of the plurality of power components depends on a first reference value, the first reference value is the number of HARQ-ACK bits used to obtain PUCCH transmit power, and the first reference value depends on the value of the first field in the first DCI and the total amount of DCI detected in the at least one PDCCH monitoring occasion that satisfies the first condition.

As one embodiment, the DCI that satisfies the first condition occupying any serving cell of the Q1 serving cells detected in the at least one PDCCH monitoring occasion is: the DCI that satisfies the first condition detected in the at least one PDCCH monitoring occasion.

As one embodiment, the value of the first field in the first DCI and the total amount of DCI satisfying the first condition and detected in the at least one PDCCH monitoring occasion together indicate the first reference value.

As one embodiment, the value of the first field in the first DCI and the total amount of DCI satisfying the first condition and detected in the at least one PDCCH monitoring occasion are used to configure the first reference value.

As one embodiment, the target power is related to the first reference value.

As one embodiment, the target power depends on the first reference value.

As one embodiment, the first reference value is used to indicate at least one power component of the plurality of power components.

As one embodiment, the first reference value is used to configure at least one power component of the plurality of power components.

As one embodiment, the plurality of power components includes a first power component that depends on the first reference value, the first power component being a PUCCH transmit power adjustment component Δ_{TF,*b,f,c*}(*i*)represented in Section 7.2.1 of 3GPP TS 38.213.

As one embodiment, the plurality of power components comprises a first power component that depends on the first reference value; the first power component is equal to 10*log*₁₀(*K*₁ · (first reference value + second reference value + third reference value)/second value) , the second value is the number of at least part of the resource elements (REs) occupied by the transmission of PUCCH, the second reference value is the number of SR information bits, the third reference value is the number of CSI information bits, and the *K*₁ is equal to 6.

As one embodiment, the second value is the number of at least part of the resource elements occupied by the transmission of the first PUCCH.

As one embodiment, the second value is the number of resource elements used for the transmission of the first PUCCH.

As one embodiment, the second value is the number of at least part of the resource elements occupied by the transmission of a PUCCH other than the first PUCCH.

As one embodiment, the first reference value is equal to the sum of a plurality of intermediate values, one of the plurality of intermediate values is equal to a positive integer multiple of the result of taking the difference of the value of the first field in the first DCI and the total amount of DCI detected in the at least one PDCCH monitoring occasion that satisfies the first condition modulo a third value, and the third value is equal to 2 to the power of V, where V is equal to the number of bits in a DAI field.

As one embodiment, the V is equal to the number of bits of a counter DAI field.

As one embodiment, the V is equal to the number of bits of a total DAI field.

As one embodiment, the V is equal to the number of bits of the counter DAI field in the first DCI.

As one embodiment, the V is equal to the number of bits of the total DAI field in the first DCI.

As one embodiment, the value of the first field in the first DCI and the Q1 components together indicate the first reference value.

As one embodiment, the first reference values depends on the value of the first field in the first DCI and the Q1 components.

As one embodiment, the first reference value is equal to the sum of a plurality of intermediate values, one of the plurality of intermediate values is equal to the product of the result of taking the difference of the value of the first field in the first DCI and the total amount of DCI detected in the at least one PDCCH monitoring occasion that satisfies the first condition modulo a third value and N1, and the third value is equal to 2 to the power of V, where V is equal to the number of bits in a DAI field.

As one embodiment, the N1 is a positive integer.

As one embodiment, the N1 is configurable.

As one embodiment, the N1 depends on the maximum number of serving cells scheduled by a DCI that satisfies the first condition.

As one embodiment, the N1 is not greater than the maximum number of serving cells scheduled by a DCI that satisfies the first condition.

As one embodiment, the N1 is not greater than the maximum number of PDSCH scheduled by a DCI that satisfies the first condition.

As one embodiment, the N1 is not greater than the maximum number of transport blocks scheduled by a DCI that satisfies the first condition.

As one embodiment, one of the plurality of intermediate values is a non-negative integer.

As one embodiment, one of the plurality of intermediate values is configurable.

As one embodiment, one of the plurality of intermediate values is a constant.

As one embodiment, one of the plurality of intermediate values depends on the number of PDSCHs scheduled by a DCI satisfying the first condition that is detected.

As one embodiment, one of the plurality of intermediate values depends on the number of transport blocks scheduled by a DCI satisfying the first condition that is detected.

As one embodiment, the first power is equal to the smaller of an upper limit power and a target power, the target power is equal to the sum of a plurality of power components, at least one power component of the plurality of power components depends on a first reference value, and the first reference value is the number of HARQ-ACK bits used to obtain PUCCH transmit power.

### Embodiment 9

Embodiment 9 exemplifies a schematic diagram of a first power according to one embodiment of the present application, as shown in FIG. 9.

In Embodiment 9, the first power is equal to the smaller of an upper limit power and a target power and the target power is equal to the sum of a plurality of power components.

As one embodiment, the target power being equal to the sum of the plurality of power components is for the dB (decibel) domain.

As one embodiment, the target power is equal to the sum of the plurality of power components from a dB perspective.

As one embodiment, the unit of one of the plurality of power components is dBm or dB.

As one embodiment, the upper limit power is a default.

As one embodiment, the upper limit power is configurable.

As one embodiment, the upper limit power is configured by higher layer signaling.

As one embodiment, the upper limit power is configured by RRC signaling.

As one embodiment, the upper limit power is a configured maximum output power.

As one embodiment, the upper limit power is for a PUCCH transmission occasion.

As one embodiment, the upper limit power is the maximum output power configured for the UE of a carrier in a PUCCH transmission occasion.

As one embodiment, the symbol representing the upper limit power includes *P*_{CMAX,*f*,*c*}.

As one embodiment, the upper limit power is in dBm (decibel milliwatts).

As one embodiment, the upper limit power is in watts (W).

As one embodiment, the upper limit power is in milliwatts (mW).

As one embodiment, the first power is in dBm.

As one embodiment, the first power is in watts (W).

As one embodiment, the first power is in milliwatts (mW).

As one embodiment, the target power is in dBm.

As one embodiment, the target power is in watts (W).

As one embodiment, the target power is in milliwatts (mW).

As one embodiment, the first power is equal to min {upper limit power, target power}.

As one embodiment, at least one of the plurality of power components is defined in Section 7.2.1 of 3GPP TS38.213.

As one embodiment, the first power component is one of the plurality of power components.

As one embodiment, the second power component is one of the plurality of power components.

As one embodiment, the third power component is one of the plurality of power components.

As one embodiment, the fourth power component is one of the plurality of power components.

As one embodiment, the fifth power component is one of the plurality of power components.

As one embodiment, the sixth power component is one of the plurality of power components.

As one embodiment, the p0-nominal domain is used to configure the sixth power component.

As one embodiment, the P0-PUCCH domain is used to configure the sixth power component.

As one embodiment, the p0-PUCCH-Value domain is used to configure the sixth power component.

As one embodiment, the sixth power component is equal to 0.

As one embodiment, the sixth power component is in dBm.

As one embodiment, the sixth power component is in watts (W).

As one embodiment, the sixth power component is in milliwatts (mW).

As one embodiment, the symbol representing the sixth power component includes P_{O_PUCCH,b,f,c}.

As one embodiment, the symbol representing the sixth power component includes O_PUCCH.

As one embodiment, the sixth power component is equal to the sum of two sub-components, any of which is a default or configured by RRC signaling.

As one embodiment, the sixth power component is equal to the sum of two sub-components, one of which is a value of p0-PUCCH-Value or equal to 0, and the other of the two sub-components is configured in a p0-nominal domain or equal to 0 dBm.

As one embodiment, the sixth power component is configurable.

As one embodiment, the first PUCCH is used to determine the second power component.

As one embodiment, frequency domain resource occupied by the first PUCCH is used to determine the second power component.

As one embodiment, the second power component is equal to 10×log₁₀(2^µ × M_{RB}), the M_{RB} is equal to the number of resource blocks included in the frequency domain, in whole or in part, in the PUCCH resource belonging to the resource occupied by the first PUCCH, and the µ is an SCS (subcarrier spacing) configuration.

As one embodiment, the second power component is equal to 10×log₁₀(2^µ × M_{RB}), the M_{RB} is equal to the number of resource blocks included in the frequency domain of the resource occupied by the first PUCCH, and the µ is an SCS (subcarrier spacing) configuration.

As one embodiment, the second power component is equal to 2^µ × M_{RB}, the M_{RB} is equal to the number of resource blocks included in the frequency domain of the resource occupied by the first PUCCH, and the µ is an SCS (subcarrier spacing) configuration.

As one embodiment, the µ is configurable.

As one embodiment, the third power component is a downlink pathloss estimate.

As one embodiment, the third power component is in dB.

As one embodiment, the third power component is calculated based on a measurement of a reference signal.

As one embodiment, the symbol representing the third power component includes PL_{b,f,c}.

As one embodiment, the symbol representing the third power component includes PL.

As one embodiment, the third power component is in watts (W).

As one embodiment, the third power component is in milliwatts (mW).

As one embodiment, the fourth power component is one of a value of deltaF-PUCCH-f2, a value of deltaF-PUCCH-f3, a value of deltaF- PUCCH-f4, or 0.

As one embodiment, the fourth power component is equal to a default value or configured by RRC signaling.

As one embodiment, the fourth power component is related to a PUCCH format.

As one embodiment, the fourth power component is related to a PUCCH format used by the first PUCCH.

As one embodiment, the first PUCCH uses one of PUCCH format 2, PUCCH format 3, or PUCCH format 4; when the first PUCCH uses PUCCH format 2, the fourth power component is a value of deltaF-PUCCH-f2 or 0; when the first PUCCH uses PUCCH format 2, the fourth power component is a value of deltaF-PUCCH-f3 or 0; when the first PUCCH uses PUCCH format 2, the fourth power component is a value of deltaF-PUCCH-f4 or 0.

As one embodiment, the symbol representing the fourth power component includes Δ_{F_PUCCH}.

As one embodiment, the symbol representing the fourth power component includes F_PUCCH.

As one embodiment, the fifth power component is a PUCCH power control adjustment state.

As one embodiment, the fifth power component is based on an indication of a TPC field in a DCI format.

As one embodiment, the fifth power component is determined based on a TPC (transmit power control) command.

As one embodiment, the value of the fifth power component is for a PUCCH transmission occasion corresponding to the first PUCCH.

As one embodiment, the TPC command for scheduled PUCCH field in the first DCI is used to determine the fifth power component.

As one embodiment, from a dB perspective, the fifth power component is linearly correlated with the value indicated by the TPC command for scheduled PUCCH field in the first DCI.

As one embodiment, the symbol representing the fifth power component includes g_{b,f,c}.

As one embodiment, the symbol representing the first power component includes Δ.

As one embodiment, the symbol representing the first power component includes Δ_{TF,b,f,c}.

As one embodiment, one of PUCCH format 2, PUCCH format 3, or PUCCH format 4 is used for the first PUCCH.

As one embodiment, one of PUCCH format 3 or PUCCH format 4 is used for the first PUCCH.

As one embodiment, the first PUCCH also occupies a code domain resource.

As one embodiment, the first power is equal to the larger of an upper limit power and a target power and the target power is equal to the sum of a plurality of power components.

As one embodiment, the first power is equal to the larger of an upper limit power and a target power and the target power is equal to the sum of a plurality of power components.

### Embodiment 10

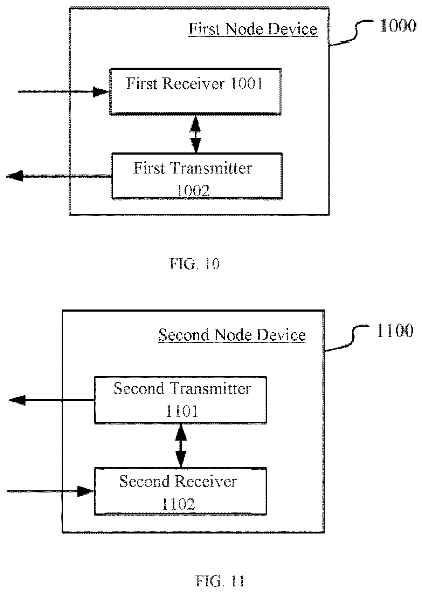

Embodiment 10 illustrates a structural block diagram of a processing apparatus in a first node device, as shown in FIG. 10. In FIG. 10, a processing apparatus 1000 of the first node device includes a first receiver 1001 and a first transmitter 1002.

As one embodiment, the first node device 1000 is a base station.

As one embodiment, the first node device 1000 is a user device.

As one embodiment, the first node device 1000 is a relay node.

As one embodiment, the first node device 1000 is an in-vehicle communications device.

As one embodiment, the first node device 1000 is a user device that supports V2X communication.

As one embodiment, the first node device 1000 is a relay node that supports V2X communication.

As one embodiment, the first node device 1000 is a user device that supports operations on a high frequency spectrum.

As one embodiment, the first node device 1000 is a user device that supports operations on a shared spectrum.

As one embodiment, the first node device 1000 is a user device that supports XR services.

As one embodiment, the first node device 1000 is a RedCap UE.

As one embodiment, the first node device 1000 is a UE with high processing capabilities.

As one embodiment, the first receiver 1001 includes at least one of the antenna 452, the receiver 454, the multi-antenna receiving processor 458, the receiving processor 456, the controller/processor 459, the memory 460, and the data source 467 in FIG. 4 of the present application.

As one embodiment, the first receiver 1001 includes at least the first five of the antenna 452, the receiver 454, the multi-antenna receiving processor 458, the receiving processor 456, the controller/processor 459, the memory 460, and the data source 467 in FIG. 4 of the present application.

As one embodiment, the first receiver 1001 includes at least the first four of the antenna 452, the receiver 454, the multi-antenna receiving processor 458, the receiving processor 456, the controller/processor 459, the memory 460, and the data source 467 in FIG. 4 of the present application.

As one embodiment, the first receiver 1001 includes at least the first three of the antenna 452, the receiver 454, the multi-antenna receiving processor 458, the receiving processor 456, the controller/processor 459, the memory 460, and the data source 467 in FIG. 4 of the present application.

As one embodiment, the first receiver 1001 includes at least the first two of the antenna 452, the receiver 454, the multi-antenna receiving processor 458, the receiving processor 456, the controller/processor 459, the memory 460, and the data source 467 in FIG. 4 of the present application.

As one embodiment, the first transmitter 1002 includes at least one of the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter 1002 includes at least the first five of the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter 1002 includes at least the first four of the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter 1002 includes at least the first three of the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter 1002 includes at least the first two of the antenna 452, the transmitter 454, the multi-antenna transmitting processor 457, the transmitting processor 468, the controller/processor 459, the memory 460, and the data source 467 in FIG. 4 of the present application.

As one embodiment, the first receiver 1001 receives first DCI, the first DCI comprising a first field; and the first transmitter 1002 sends a first PUCCH at a first power, wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition, and one DCI satisfying the first condition schedules a plurality of serving cells.

As one embodiment, the total amount of DCI that satisfies the first condition occupying the given serving cell detected in the at least one PDCCH monitoring occasion refers to: the total amount of DCI that satisfies the first condition for the given serving cell detected in the at least one PDCCH monitoring occasion.

As one embodiment, the total amount of DCI that satisfies the first condition occupying the given serving cell detected in the at least one PDCCH monitoring occasion refers to: the total amount of DCI that satisfies the first condition on the given serving cell detected in the at least one PDCCH monitoring occasion.

As one embodiment, the total amount of DCI that satisfies the first condition occupying the given serving cell detected in the at least one PDCCH monitoring occasion refers to: the total amount of DCI that satisfies the first condition transmitted on the given serving cell detected in the at least one PDCCH monitoring occasion.

As one embodiment, the total amount of DCI that satisfies the first condition occupying the given serving cell detected in the at least one PDCCH monitoring occasion refers to: the total amount of DCI on the given serving cell that satisfies the first condition detected in the at least one PDCCH monitoring occasion.

As one embodiment, the total amount of DCI that satisfies the first condition occupying the given serving cell detected in the at least one PDCCH monitoring occasion refers to: the total amount of DCI that satisfies the first condition with the given serving cell as the reference serving cell detected in the at least one PDCCH monitoring occasion; for DCI scheduling multiple serving cells, the corresponding reference serving cell is determined according to at least one of the scheduling order or the serving cell index.

As one embodiment, the first power is equal to the smaller of an upper limit power and a target power, the target power is equal to the sum of a plurality of power components, and at least one power component of the plurality of power components depends on a value of the first field in the first DCI and the Q1 components.

As one embodiment, at least one of the plurality of power components depends on a first reference value, the first reference value is the number of HARQ-ACK bits used to obtain PUCCH transmit power, and the first reference value depends on the value of the first field in the first DCI and the Q1 components.

As one embodiment, one of the plurality of power components is equal to 10log₁₀(K₁ · first value/second value) , the second value is the number of resource elements used for PUCCH transmission, the first value is equal to the sum of a plurality of values, one of the plurality of values is equal to a positive integer multiple of the result of taking the difference of the value of the first field in the first DCI and the total amount of DCI detected in the at least one PDCCH monitoring occasion that satisfies the first condition modulo a third value, and the third value is equal to 2 to the power of V, where V is equal to the number of bits in a DAI field.

### Embodiment 11

Embodiment 11 illustrates a structural block diagram of a processing apparatus in a second node device, as shown in FIG. 11. In FIG. 11, the processing apparatus 1100 of the second node device includes a second transmitter 1101 and a second receiver 1102.

As one embodiment, the second node device 1100 is a user device.

As one embodiment, the second node device 1100 is a base station.

As one embodiment, the second node device 1100 is a satellite device.

As one embodiment, the second node device 1100 is a relay node.

As one embodiment, the second node device 1100 is an in-vehicle communications device.

As one embodiment, the second node device 1100 is a user device that supports V2X communication.

As one embodiment, the second node device 1100 is a device that supports operations on a high frequency spectrum.

As one embodiment, the second node device 1100 is a device that supports operations on a shared spectrum.

As one embodiment, the second node device 1100 is a device that supports XR services.

As one embodiment, the second node device 1100 is one of a test apparatus, a test device, or a test instrument.

As one embodiment, the second transmitter 1101 includes at least one of the antenna 420, the transmitter 418, the multi-antenna transmitting processor 471, the transmitting processor 416, the controller/processor 475, and the memory 476 in FIG. 4 of the present application.

As one embodiment, the second transmitter 1101 includes at least the first five of the antenna 420, the transmitter 418, the multi-antenna transmitting processor 471, the transmitting processor 416, the controller/processor 475, and the memory 476 in FIG. 4 of the present application.

As one embodiment, the second transmitter 1101 includes at least the first four of the antenna 420, the transmitter 418, the multi-antenna transmitting processor 471, the transmitting processor 416, the controller/processor 475, and the memory 476 in FIG. 4 of the present application.

As one embodiment, the second transmitter 1101 includes at least the first three of the antenna 420, the transmitter 418, the multi-antenna transmitting processor 471, the transmitting processor 416, the controller/processor 475, and the memory 476 in FIG. 4 of the present application.

As one embodiment, the second transmitter 1101 includes at least the first two of the antenna 420, the transmitter 418, the multi-antenna transmitting processor 471, the transmitting processor 416, the controller/processor 475, and the memory 476 in FIG. 4 of the present application.

As one embodiment, the second receiver 1102 includes at least one of the antenna 420, the receiver 418, the multi-antenna receiving processor 472, the receiving processor 470, the controller/processor 475, and the memory 476 in FIG. 4 of the present application.

As one embodiment, the second receiver 1102 includes at least the first five of the antenna 420, the receiver 418, the multi-antenna receiving processor 472, the receiving processor 470, the controller/processor 475, and the memory 476 in FIG. 4 of the present application.

As one embodiment, the second receiver 1102 includes at least the first four of the antenna 420, the receiver 418, the multi-antenna receiving processor 472, the receiving processor 470, the controller/processor 475, and the memory 476 in FIG. 4 of the present application.

As one embodiment, the second receiver 1102 includes at least the first three of the antenna 420, the receiver 418, the multi-antenna receiving processor 472, the receiving processor 470, the controller/processor 475, and the memory 476 in FIG. 4 of the present application.

As one embodiment, the second receiver 1102 includes at least the first two of the antenna 420, the receiver 418, the multi-antenna receiving processor 472, the receiving processor 470, the controller/processor 475, and the memory 476 in FIG. 4 of the present application.

As one embodiment, the second transmitter 1101 sends first DCI, the first DCI comprising a first field; the second receiver 1102 receives a first PUCCH sent at a first power; wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected by the transmitting end of the first PUCCH in at least one PDCCH monitoring occasion, occupies the given serving cell, and satisfies a first condition, and one DCI satisfying the first condition schedules a plurality of serving cells.

As one embodiment, the total amount of DCI that satisfies the first condition occupying the given serving cell detected by the transmitting end of the first PUCCH in the at least one PDCCH monitoring occasion refers to: the total amount of DCI that satisfies the first condition for the given serving cell detected by the transmitting end of the first PUCCH in the at least one PDCCH monitoring occasion.

As one embodiment, the total amount of DCI that satisfies the first condition occupying the given serving cell detected by the transmitting end of the first PUCCH in the at least one PDCCH monitoring occasion refers to: the total amount of DCI that satisfies the first condition on the given serving cell detected by the transmitting end of the first PUCCH in the at least one PDCCH monitoring occasion.

As one embodiment, the total amount of DCI that satisfies the first condition occupying the given serving cell detected by the transmitting end of the first PUCCH in the at least one PDCCH monitoring occasion refers to: the total amount of DCI that satisfies the first condition transmitted on the given serving cell detected by the transmitting end of the first PUCCH in the at least one PDCCH monitoring occasion.

As one embodiment, the total amount of DCI that satisfies the first condition occupying the given serving cell detected by the transmitting end of the first PUCCH in the at least one PDCCH monitoring occasion refers to: the total amount of DCI on the given serving cell that satisfies the first condition detected by the transmitting end of the first PUCCH in the at least one PDCCH monitoring occasion.

As one embodiment, the total amount of DCI that satisfies the first condition occupying the given serving cell detected by the transmitting end of the first PUCCH in the at least one PDCCH monitoring occasion refers to: the total amount of DCI that satisfies the first condition with the given serving cell as the reference serving cell detected by the transmitting end of the first PUCCH in the at least one PDCCH monitoring occasion; for DCI scheduling multiple serving cells, the corresponding reference serving cell is determined according to at least one of the scheduling order or the serving cell index.

As one embodiment, the first power is equal to the smaller of an upper limit power and a target power, the target power is equal to the sum of a plurality of power components, and at least one power component of the plurality of power components depends on a value of the first field in the first DCI and the Q1 components.

As one embodiment, at least one of the plurality of power components depends on a first reference value, the first reference value is the number of HARQ-ACK bits used to obtain PUCCH transmit power, and the first reference value depends on the value of the first field in the first DCI and the Q1 components.

As one embodiment, one of the plurality of power components is equal to 10log₁₀ (K₁ · first value/second value) , the second value is the number of resource elements used for PUCCH transmission, the first value is equal to the sum of a plurality of values, one of the plurality of values is equal to a positive integer multiple of the result of taking the difference of the value of the first field in the first DCI and the total amount of DCI detected by the transmitting end of the first PUCCH in the at least one PDCCH monitoring occasion that satisfies the first condition modulo a third value, and the third value is equal to 2 to the power of V, where V is equal to the number of bits in a DAI field.

Those of ordinary skill in the art may understand that all or part of the steps in the above described methods can be accomplished by instructing relevant hardware through a program that can be stored in computer-readable storage media, such as read only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules. The present application is not limited to the combination of software and hardware of any particular form. The first node device in the present application includes but is not limited to cell phones, tablets, notebooks, network cards, low-power devices, eMTC devices, NB-IoT devices, in-vehicle communications devices, aircraft, drones, remote-controlled aircraft, and other wireless communication devices. The second node device in the present application includes but is not limited to cell phones, tablets, notebooks, network cards, low-power devices, eMTC devices, NB-IoT devices, in-vehicle communications devices, aircraft, drones, remote-controlled aircraft, and other wireless communication devices. The user device, UE, or terminal in the present application includes but is not limited to cell phones, tablets, notebooks, network cards, low-power devices, eMTC devices, NB-IoT devices, in-vehicle communications devices, aircraft, drones, remote-controlled aircraft, and other wireless communication devices. The base station device, base station, or network side device in the present application includes but is not limited to macrocells, microcells, home base stations, relay base stations, eNB, gNB, transmission reception points TRPs, GNSS, relay satellites, satellite base stations, aerial base stations, test apparatuses, test devices, test instruments, and other devices.

It will be understood by those skilled in the art that the present invention may be implemented in other specified forms that do not deviate from its core or essential features. Thus, the presently disclosed embodiments should in any event be considered descriptive rather than limiting. The scope of the invention is determined by the appended claims, not by the preceding description, and all changes within their equivalent meaning and area are considered to be included therein.

## Claims

1. A first node used in wireless communication, comprising:
a first receiver for receiving first DCI comprising a first field;
and a first transmitter for sending a first PUCCH at a first power;
wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition, and one DCI satisfying the first condition schedules a plurality of serving cells.

2. The first node according to Claim 1, wherein the total amount of DCI that satisfies the first condition that occupies the given serving cell detected in the at least one PDCCH monitoring occasion refers to: the total amount of DCI that satisfies the first condition on the given serving cell detected in the at least one PDCCH monitoring occasion.

3. The first node according to Claim 1, wherein the total amount of DCI that satisfies the first condition that occupies the given serving cell detected in the at least one PDCCH monitoring occasion refers to: the total amount of DCI that satisfies the first condition with the given serving cell as the reference serving cell detected in the at least one PDCCH monitoring occasion; for DCI scheduling multiple serving cells, the corresponding reference serving cell is determined according to at least one of the scheduling order or the serving cell index.

4. The first node according to any one of Claims 1-3, wherein the first power is equal to the smaller of an upper limit power and a target power, the target power is equal to the sum of a plurality of power components, and at least one power component of the plurality of power components depends on the value of the first field in the first DCI and the Q1 components.

5. The first node according to Claim 4, wherein at least one of the plurality of power components depends on a first reference value, the first reference value is the number of HARQ-ACK bits used to obtain PUCCH transmit power, and the first reference value depends on the value of the first field in the first DCI and the Q1 components.

6. The first node according to Claim 5, wherein the first reference value is equal to the sum of a plurality of intermediate values, one of the plurality of intermediate values is equal to a positive integer multiple of the result of taking the difference of the value of the first field in the first DCI minus the sum of the Q1 components modulo a third value, and the third value is equal to 2 to the power of V, where V is equal to the number of bits in a DAI field.

7. The first node according to Claim 4 or 5, wherein the first reference value is equal to the sum of a plurality of intermediate values, one of the plurality of intermediate values is equal to the product of the difference between the value of the first field in the first DCI minus the sum of the Q1 components modulo a third value and N1, and the third value is equal to 2 to the power of V, where V is equal to the number of bits in a DAI field; N1 is a configurable positive integer, and N1 depends on the maximum number of serving cells scheduled by the DCI that satisfies the first condition.

8. The first node according to any one of Claims 4-7, wherein the upper limit power is a configured maximum output power, or the upper limit power is a maximum output power configured for a UE of a carrier in a PUCCH transmission occasion.

9. The first node according to any one of Claims 4-8, wherein the plurality of power components comprises a first power component that depends on the first reference value; the first power component is equal to 10*log*₁₀ (*K*₁ · (first reference value + second reference value + third reference value)/second value) , the second value is the number of at least part of the resource elements occupied by the transmission of PUCCH, the second reference value is the number of SR information bits, and the third reference value is the number of CSI information bits.

10. The first node according to any one of Claims 1-9, wherein the first field is a DAI field.

11. A second node used in wireless communication, comprising:
a second transmitter sending first DCI comprising a first field;
a second receiver receiving a first PUCCH sent at a first power;
wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected by the transmitting end of the first PUCCH in at least one PDCCH monitoring occasion, occupies the given serving cell, and satisfies a first condition, and one DCI satisfying the first condition schedules a plurality of serving cells.

12. The second node according to Claim 11, wherein the total amount of DCI that satisfies the first condition that occupies the given serving cell detected by the transmitting end of the first PUCCH in the at least one PDCCH monitoring occasion refers to: the total amount of DCI that satisfies the first condition on the given serving cell detected by the transmitting end of the first PUCCH in the at least one PDCCH monitoring occasion.

13. The second node according to Claim 11, wherein the total amount of DCI that satisfies the first condition that occupies the given serving cell detected by the transmitting end of the first PUCCH in the at least one PDCCH monitoring occasion refers to: the total amount of DCI that satisfies the first condition with the given serving cell as the reference serving cell detected by the transmitting end of the first PUCCH in the at least one PDCCH monitoring occasion; for DCI scheduling multiple serving cells, the corresponding reference serving cell is determined according to at least one of the scheduling order or the serving cell index.

14. The second node according to any one of Claims 11-13, wherein the first power is equal to the smaller of an upper limit power and a target power, the target power is equal to the sum of a plurality of power components, and at least one power component of the plurality of power components depends on the value of the first field in the first DCI and the Q1 components.

15. The second node according to Claim 14, wherein at least one of the plurality of power components depends on a first reference value, the first reference value is the number of HARQ-ACK bits used to obtain PUCCH transmit power, and the first reference value depends on the value of the first field in the first DCI and the Q1 components.

16. The second node according to Claim 15, wherein the first reference value is equal to the sum of a plurality of intermediate values, one of the plurality of intermediate values is equal to a positive integer multiple of the result of taking the difference of the value of the first field in the first DCI minus the sum of the Q1 components modulo a third value, and the third value is equal to 2 to the power of V, where V is equal to the number of bits in a DAI field.

17. The second node according to Claim 14 or 15, wherein the first reference value is equal to the sum of a plurality of intermediate values, one of the plurality of intermediate values is equal to the product of the difference between the value of the first field in the first DCI minus the sum of the Q1 components modulo a third value and N1, and the third value is equal to 2 to the power of V, where V is equal to the number of bits in a DAI field; N1 is a configurable positive integer, and N1 depends on the maximum number of serving cells scheduled by the DCI that satisfies the first condition.

18. The second node according to any one of Claims 14-17, wherein the upper limit power is a configured maximum output power, or the upper limit power is a maximum output power configured for a UE of a carrier in a PUCCH transmission occasion.

19. The second node according to any one of Claims 14-18, wherein the plurality of power components comprises a first power component that depends on the first reference value; the first power component is equal to 10*log*₁₀ (*K*₁ · (first reference value + second reference value + third reference value)/second value) , the second value is the number of at least part of the resource elements occupied by the transmission of PUCCH, the second reference value is the number of SR information bits, and the third reference value is the number of CSI information bits.

20. The second node according to any one of Claims 11-19, wherein the first field is a DAI field.

21. A method used in a first node in wireless communication, comprising:
receiving first DCI comprising a first field;
sending a first PUCCH at a first power;
wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected in at least one PDCCH monitoring occasion, occupies the given serving cell, and satisfies a first condition, and one DCI satisfying the first condition schedules a plurality of serving cells.

22. The method in the first node according to Claim 21, wherein the total amount of DCI that satisfies the first condition that occupies the given serving cell detected in the at least one PDCCH monitoring occasion refers to: the total amount of DCI that satisfies the first condition on the given serving cell detected in the at least one PDCCH monitoring occasion.

23. The method in the first node according to Claim 21, wherein the total amount of DCI that satisfies the first condition that occupies the given serving cell detected in the at least one PDCCH monitoring occasion refers to: the total amount of DCI that satisfies the first condition with the given serving cell as the reference serving cell detected in the at least one PDCCH monitoring occasion; for DCI scheduling multiple serving cells, the corresponding reference serving cell is determined according to at least one of the scheduling order or the serving cell index.

24. The method in the first node according to any one of Claims 21-23, wherein the first power is equal to the smaller of an upper limit power and a target power, the target power is equal to the sum of a plurality of power components, and at least one power component of the plurality of power components depends on the value of the first field in the first DCI and the Q1 components.

25. The method in the method in the first node according to Claim 24, wherein at least one of the plurality of power components depends on a first reference value, the first reference value is the number of HARQ-ACK bits used to obtain PUCCH transmit power, and the first reference value depends on the value of the first field in the first DCI and the Q1 components.

26. The method in the first node according to Claim 25, wherein the first reference value is equal to the sum of a plurality of intermediate values, one of the plurality of intermediate values is equal to a positive integer multiple of the result of taking the difference of the value of the first field in the first DCI minus the sum of the Q1 components modulo a third value, and the third value is equal to 2 to the power of V, where V is equal to the number of bits in a DAI field.

27. The method in the first node according to Claim 24 or 25, wherein the first reference value is equal to the sum of a plurality of intermediate values, one of the plurality of intermediate values is equal to the product of the difference between the value of the first field in the first DCI minus the sum of the Q1 components modulo a third value and N1, and the third value is equal to 2 to the power of V, where V is equal to the number of bits in a DAI field; N1 is a configurable positive integer, and N1 depends on the maximum number of serving cells scheduled by the DCI that satisfies the first condition.

28. The method in the first node according to any one of Claims 24-27, wherein the upper limit power is a configured maximum output power, or the upper limit power is a maximum output power configured for a UE of a carrier in a PUCCH transmission occasion.

29. The method in the first node according to any one of Claims 24-28, wherein the plurality of power components comprises a first power component that depends on the first reference value; the first power component is equal to 10*log*₁₀ (*K*₁ · (first reference value + second reference value + third reference value)/second value), the second value is the number of at least part of the resource elements occupied by the transmission of PUCCH, the second reference value is the number of SR information bits, and the third reference value is the number of CSI information bits.

30. The method in the first node according to any one of Claims 21-29, wherein the first field is a DAI field.

31. A method used in a second node in wireless communication, comprising:
sending first DCI comprising a first field;
receiving a first PUCCH sent at a first power;
wherein the first power depends on a value of the first field at least in the first DCI and Q1 components, Q1 being a positive integer; the Q1 components are in one-to-one correspondence with Q1 serving cells; a given serving cell is one of the Q1 serving cells; for the given serving cell, a corresponding component is equal to the total amount of DCI that is detected by the transmitting end of the first PUCCH in at least one PDCCH monitoring occasion, occupies the given serving cell, and satisfies a first condition, and one DCI satisfying the first condition schedules a plurality of serving cells.

32. The method in the second node according to Claim 31, wherein the total amount of DCI that satisfies the first condition that occupies the given serving cell detected by the transmitting end of the first PUCCH in the at least one PDCCH monitoring occasion refers to: the total amount of DCI that satisfies the first condition on the given serving cell detected by the transmitting end of the first PUCCH in the at least one PDCCH monitoring occasion.

33. The method in the second node according to Claim 31, wherein the total amount of DCI that satisfies the first condition that occupies the given serving cell detected by the transmitting end of the first PUCCH in the at least one PDCCH monitoring occasion refers to: the total amount of DCI that satisfies the first condition with the given serving cell as the reference serving cell detected by the transmitting end of the first PUCCH in the at least one PDCCH monitoring occasion; for DCI scheduling multiple serving cells, the corresponding reference serving cell is determined according to at least one of the scheduling order or the serving cell index.

34. The method in the second node according to any one of Claims 31-33, wherein the first power is equal to the smaller of an upper limit power and a target power, the target power is equal to the sum of a plurality of power components, and at least one power component of the plurality of power components depends on the value of the first field in the first DCI and the Q1 components.

35. The method in the second node according to Claim 34, wherein at least one of the plurality of power components depends on a first reference value, the first reference value is the number of HARQ-ACK bits used to obtain PUCCH transmit power, and the first reference value depends on the value of the first field in the first DCI and the Q1 components.

36. The method in the second node according to Claim 35, wherein the first reference value is equal to the sum of a plurality of intermediate values, one of the plurality of intermediate values is equal to a positive integer multiple of the result of taking the difference of the value of the first field in the first DCI minus the sum of the Q1 components modulo a third value, and the third value is equal to 2 to the power of V, where V is equal to the number of bits in a DAI field.

37. The method in the second node according to Claim 34 or 35, wherein the first reference value is equal to the sum of a plurality of intermediate values, one of the plurality of intermediate values is equal to the product of the difference between the value of the first field in the first DCI minus the sum of the Q1 components modulo a third value and N1, and the third value is equal to 2 to the power of V, where V is equal to the number of bits in a DAI field; N1 is a configurable positive integer, and N1 depends on the maximum number of serving cells scheduled by the DCI that satisfies the first condition.

38. The method in the second node according to any one of Claims 34-37, wherein the upper limit power is a configured maximum output power, or the upper limit power is a maximum output power configured for a UE of a carrier in a PUCCH transmission occasion.

39. The method in the second node according to any one of Claims 34-38, wherein the plurality of power components comprises a first power component that depends on the first reference value; the first power component is equal to 10*log*₁₀ (*K*₁ · (first reference value + second reference value + third reference value)/second value), the second value is the number of at least part of the resource elements occupied by the transmission of PUCCH, the second reference value is the number of SR information bits, and the third reference value is the number of CSI information bits.

40. The method in the second node according to any one of Claims 31-39, wherein the first field is a DAI field.
